# EUROPEAN PATENT APPLICATION

(11) **EP 4 653 305 A2**
(43) Date of publication of application: **26.11.2025**
(21) Application number: 25207963.7
(22) Date of filing: 27.09.2024
(51) Int. Cl.: B62M 11/16

(54) **BICYCLE WHEEL HUB, BICYCLE DRIVE TRAIN AND METHODS FOR THE USE THEREOF**

(30) Priority: 27.09.2023 US 202318475614
(62) Divisional of application: 24203236.5
(71) Applicant: SRAM, LLC., Chicago, IL 60607 (US)
(72) Inventor: Shipman, Christopher, Chicago, 60626 (US); Jordan, Brian, Chicago, 60626 (US); Medaglia, Anthony, San Luis Obispo, 93406 (US)
(74) Representative: Thum, Bernhard

(57) **Abstract**

A bicycle wheel hub includes a driver rotatable about an axis at a first rotational speed, wherein the driver includes a mating feature configured to engage a cassette. A shell is rotatable about the axis at a second rotational speed. A non-adjustable gear train is coupled between the driver and the shell, wherein the gear train defines a single fixed gear ratio greater than 1:1 between the driver and the shell. A bicycle drive train includes a drive unit having a user input component rotatable about a first axis at a first rotational speed, a chain ring rotatable about a second axis at a second rotational speed, and a gear train coupled between the user input component and the chain ring. The gear train defines a gear ratio less than 1:1 between the user input component and the chain ring. A method of propelling a bicycle is also provided.

## Description

### Field of the Disclosure

The present application generally relates to a bicycle drive train having a bicycle wheel hub incorporated into a bicycle drive train, and to methods for the use thereof.

### Background

Bicycles are typically configured with a chain that acts between one or more front chain rings and one or more rear sprockets of a cassette. Front and/or rear derailleurs may be actuated to effect shifting of the chain between chain rings and/or between different sprockets on the cassette. Shifting under load, however, may create high tension in the chain, which may adversely affect the quickness and smoothness of the gear shift, and may increase wear and the possibility of damage to the drive train. The challenges of high chain tension may be exacerbated when the bicycle includes an electric motor to assist in cranking. The electric motor complements the user by providing additional input torque to the drive train. Due to control system limitations, the motor may continue to momentarily apply torque to the drive train after a user has reduced their torque input in preparation to command a shift. In this way, the drive train on a bicycle equipped with an electric motor ("e-bike") may be exposed to higher tension loads in the chain during a shift than there would be in the case of a non-motor assisted bicycle. During shifting operations of the drive train, this may result in a higher potential for damage to the drive train itself, and also a perceived rough shifting implementation.

Moreover, electric motor assist bicycles typically have a gear reduction between the motor output and the rider input, which reduces the relatively high revolutions per minute (rpm) and low torque of the electric motor to a more typical cyclist cadence and higher torque, such that the motor input may work in parallel with the rider input. The resultant torque and angular velocity (rpm) input into the drive train at the chainring is in the range of a typical cyclist plus some added torque assistance due to the motor, therefore the chain tension and the associated drive train loads are higher than may be experienced by a bicycle being propelled only by rider input.

### Summary

In one aspect, one embodiment of a bicycle wheel hub includes a driver rotatable about an axis at a first rotational speed, wherein the driver includes a mating feature configured to engage a cassette. A shell includes a wheel attachment feature, wherein the shell is rotatable about the axis at a second rotational speed. A non-adjustable gear train is coupled between the driver and the shell, wherein the gear train defines a single fixed gear ratio between the driver and the shell. The gear ratio is greater than 1:1 such that the second rotational speed is less than the first rotational speed.

In another aspect, one embodiment of a bicycle drive train includes a drive unit having a user input component rotatable about a first axis at a first rotational speed, a chain ring rotatable about a second axis at a second rotational speed, and a first gear train coupled between the user input component and the chain ring. The first gear train defines a first gear ratio between the user input component and the chain ring, wherein the first gear ratio is less than 1:1 such that the second rotational speed is greater than the first rotational speed. A bicycle wheel hub includes a driver rotatable about a third axis at a third rotational speed, a gear coupled to and rotatable with the driver about the third axis at the third rotational speed, and a shell having a wheel attachment feature, wherein the shell is rotatable about the third axis at a fourth rotational speed. A second gear train is coupled between the driver and the shell, wherein the second gear train defines a second gear ratio between the driver and the shell. The second gear ratio is greater than 1:1 such that the fourth rotational speed is less than the third rotational speed. A closed loop component connects the chain ring and the gear.

In yet another aspect, one embodiment of a method of propelling a bicycle, or using the drive train and bicycle wheel hub, includes rotating a crank about a first axis at a first rotational speed, simultaneously rotating a chain ring coupled to the crank about a second axis at a second rotational speed greater than the first rotational speed, simultaneously rotating a gear about a third axis at a third rotational speed, wherein the gear is coupled to the chain ring with a closed loop component, and simultaneously rotating a wheel about the third axis at a fourth rotational speed less than the third rotational speed.

The various embodiments of the bicycle wheel hub and drive train, and the methods for the use and assembly thereof, provide significant advantages over other bicycle wheel hubs, drive trains and methods. For example and without limitation, and unlike a typical bicycle drive train in which the chain ring rotates at the same angular velocity, or rotational speed, as the user input component, the first gear train between the user input and the chain ring causes the chain ring to rotate at a greater angular velocity than the user input component. Thus, the closed loop component, configured for example and without limitation as a chain or belt, moves faster, and has a lower tension, than a typical bicycle chain, resulting in reduced drive train wear. Because the closed loop component moves faster than a chain in a conventional bicycle configured without a gear train, the cassette rotates faster than a typical cassette, and therefore shift speed is increased due to the fact that shift gates on the cassette interact with the closed loop component more frequently. Unlike a typical bicycle rear wheel hub in which the hub shell, and therefore the wheel, rotate at the same speed as the cassette, the bicycle rear hub of the present invention has a second gear train between the cassette and the hub shell, such that the hub shell rotates at a slower angular velocity than the cassette.

In one embodiment, the gear ratio of the first gear train may be the inverse of the gear ratio of the second gear train. In other words, the degree to which the chain ring spins faster than the user input component is "cancelled out" by the degree to which the hub shell rotates slower than the cassette. As a result, the rear wheel rotates at an appropriate angular velocity relative to the angular velocity of the user input component. This embodiment further permits use of conventional front and rear gear changers, or derailleurs, if desired. In essence, the closed loop component is sped up to reduce chain tension, and a gear reduction in the rear hub slows things down so that the rear wheel spins at a predetermined speed. As a result, the load input on the drive train is reduced to prevent damage during shifting and reduce the perception of rough shifting under load.

In combination with a motor, the gear ratio from the output of the rider is matched with the high speed/low torque of the motor output, which works in parallel with the user input component. This results in an output to the chainring at a greater angular velocity than a typical cyclist cadence but with a lower torque, even with the motor assisting the torque. The gear reduction mechanism in the rear bicycle wheel hub then restores the intended gear ratio, such that conventional sized chainrings and rear cassettes, or sprocket sets, may be used. In this way, power is transmitted through the external drive train (chainring, closed loop component, rear cassette) at relatively low load and high speed, which reduces the potential for damage to the drive train and improves shifting performance. For example, the perceived time to shift completion by the user may be reduced. This is achieved because the linear chain speed is increased, with an attendant higher frequency of shift locations passing by on the rear cassette for a given riding speed when compared to a conventional bicycle drive train.

The foregoing paragraphs have been provided by way of general introduction and are not intended to limit the scope of the claims presented below. The various preferred embodiments, together with further advantages, will be best understood by reference to the following detailed description taken in conjunction with the accompanying drawings.

### Brief Description of the Drawings

Objects, features, and advantages of the present invention will become apparent upon reading the following description in conjunction with the drawing figures, in which:
FIG. 1 is a side view of one example of a bicycle.

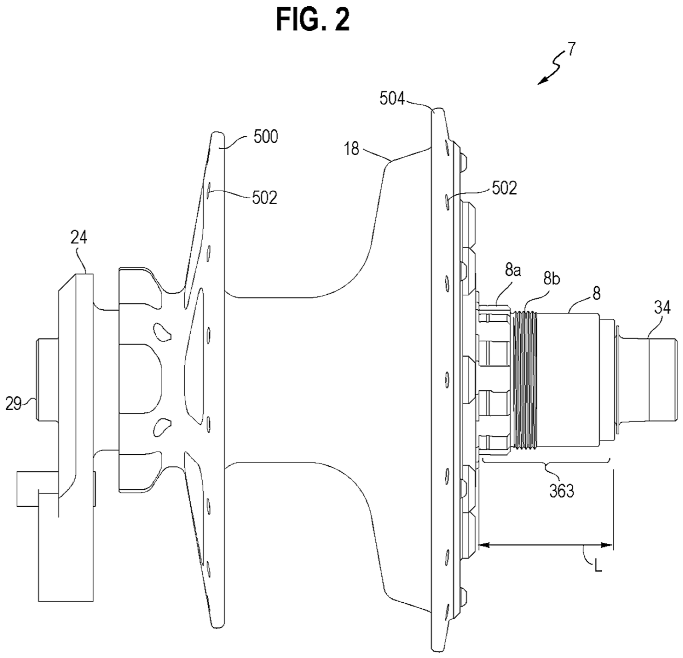

FIG. 2 is a rear view of one embodiment of a rear bicycle wheel hub.

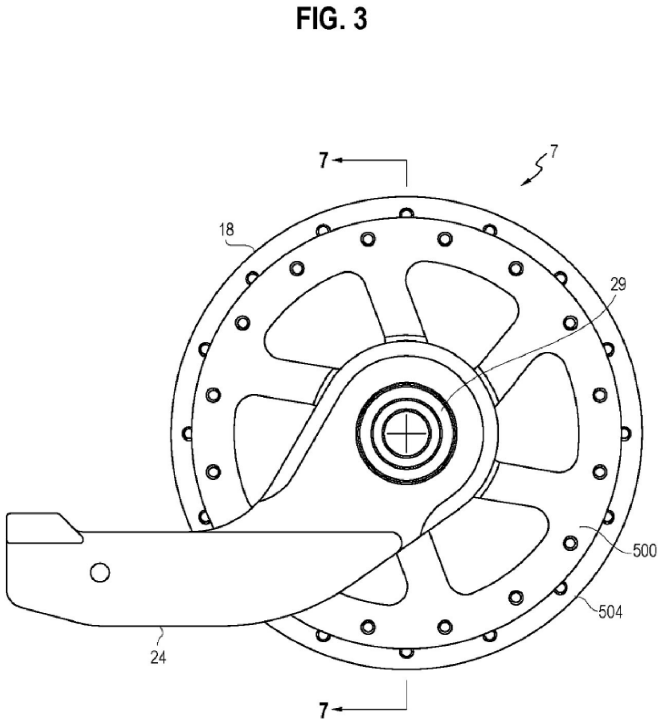

FIG. 3 is a left side view of the rear bicycle wheel hub shown in Figure 2.
FIG. 4 is a right side view of the rear bicycle wheel hub shown in Figure 3.

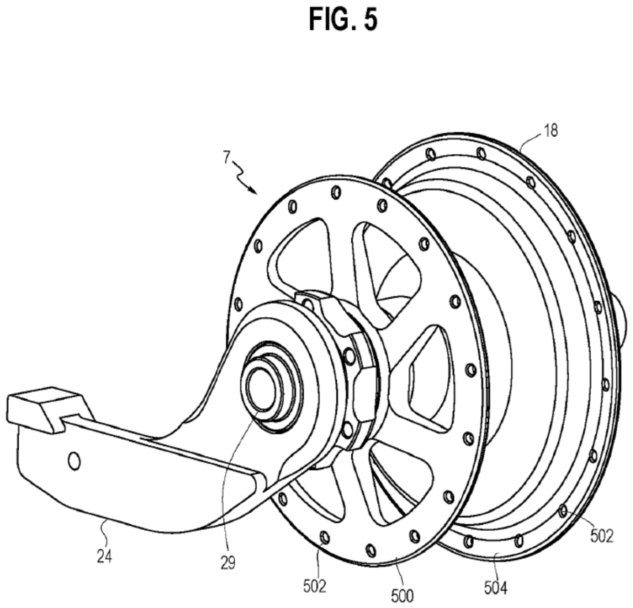

FIG. 5 is a left perspective view of the rear bicycle wheel hub shown in Figure 2.
FIG. 6 is a right perspective view of the rear bicycle wheel hub shown in Figure 2.
FIG. 7 is a cross-sectional view of the rear bicycle wheel hub taken along line 7-7 in Figure 3.
FIG. 8 is a cross-sectional view of the rear bicycle wheel hub taken along line 8-8 in Figure 7.
FIG. 9 is a cross-sectional view of the rear bicycle wheel hub taken along line 9-9 in Figure 7.
FIG. 10 is a cross-sectional view of the rear bicycle wheel hub taken along line 10-10 in Figure 7.
FIG. 11 is a rear view of the rear bicycle wheel hub shown in Figure 2 with a brake rotor and cassette installed thereon.
FIG. 12 is a left side view of the rear bicycle wheel hub assembly shown in Figure 11.
FIG. 13 is a cross-sectional view of the rear bicycle wheel hub assembly taken along line 13-13 in Figure 12.

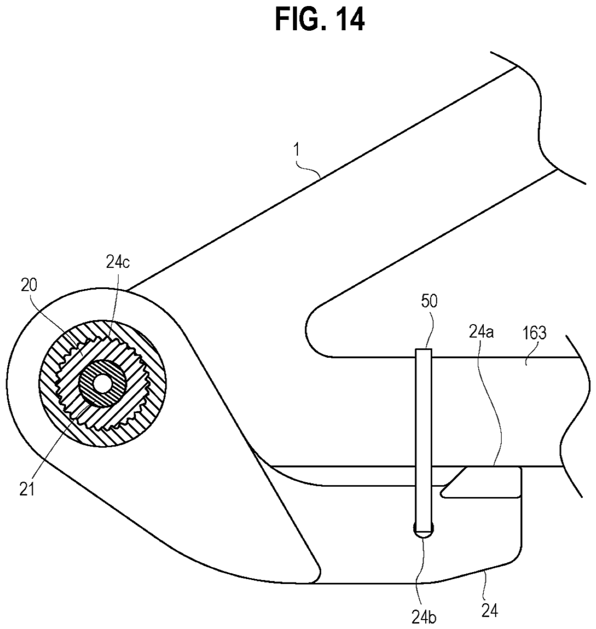

FIG. 14 is a cross-sectional view of the rear bicycle wheel hub assembly taken along line 14-14 in Figure 13.
FIG. 15 is a right side view of one embodiment of a bicycle drive train.
FIG. 16 is a cross-sectional view of the bicycle drive train taken along line 16-16 in Figure 1.
FIG. 17 is a cross-sectional view of the bicycle drive train taken along line 17-17 in Figure 16.
FIG. 18 is a schematic illustration of one embodiment of a bicycle drive train.
FIG. 19 is a schematic illustration of another embodiment of a bicycle drive train.

### Detailed Description of the Disclosure

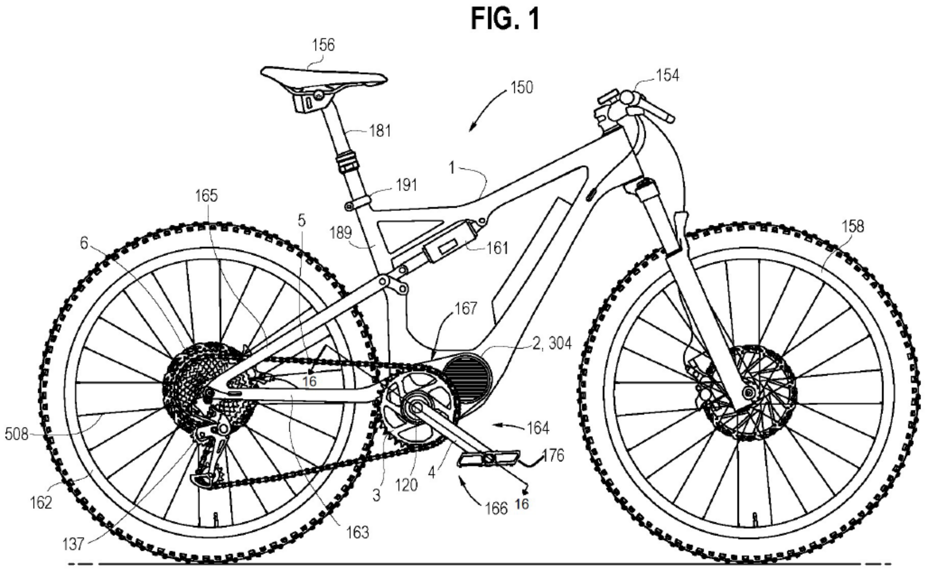

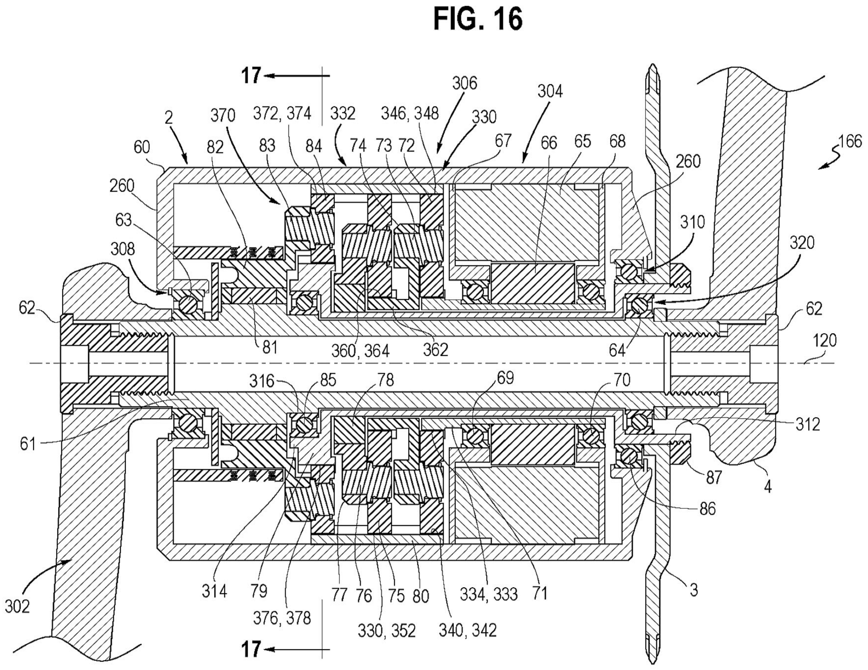

It should be understood that the term "plurality," as used herein, means two or more. The term "longitudinal," as used herein means of or relating to a length or lengthwise direction. The term "lateral," as used herein, means situated on, directed toward or running in a side-to-side direction. The term "coupled" means connected to or engaged with, whether directly or indirectly, for example with an intervening member, and does not require the engagement to be fixed or permanent, although it may be fixed or permanent. The terms "first," "second," and so on, as used herein are not meant to be assigned to a particular component so designated, but rather are simply referring to such components in the numerical order as addressed, meaning that a component designated as "first" may later be a "second" such component, depending on the order in which it is referred. It should also be understood that designation of "first" and "second" does not necessarily mean that the two components or values so designated are different, meaning for example a first axis may be the same as a second axis, with each simply being applicable to different components. The terms "upper," "lower," "rear," "front," "fore," "aft," "vertical," "horizontal," "right," "left," "inboard," "outboard" and variations or derivatives thereof, refer to the orientations of an exemplary bicycle 150, shown in FIG. 1, from the perspective of a user seated thereon, for example with an "inboard" component or feature being closer to a vertical mid-plane of the bicycle extending in a direction A. The term "transverse" means non-parallel. The terms "outer" and "outwardly" refers to a direction or feature facing away from a centralized location, for example the phrases "radially outwardly," "radial direction" and/or derivatives thereof, refer to a feature diverging away from a centralized location, for example a rotation axis 120 of the chainring assembly as shown in FIG. 1 and 16. Conversely, the terms "inward" and "inwardly" refers to a direction facing toward the centralized or interior location. The term "subassembly" refers to an assembly of a plurality of components, with subassemblies capable of being further assembled into other subassemblies and/or a final assembly, such as the bicycle 150.

### BICYCLE:

FIG. 1 illustrates one example of a human powered vehicle. In this example, the vehicle is one possible type of bicycle 150, such as a mountain bicycle. The bicycle 150 has a frame 1, handlebars 154 near a front end of the frame, and a seat or saddle 156 for supporting a rider over a top of the frame. In the illustrated example, the saddle 156 is supported on a seat post 181 having an end portion received in a top of a frame seat tube 89 of the frame. A clamping ring 191 may be tightened to secure the upper seat post 181 to the lower frame seat tube 189. The bicycle 150 has a first or front wheel 158 carried by a front fork subassembly 60 supporting the front end of the frame. The bicycle 50 also has a second or rear wheel 162 supporting a rear end of the frame 1. The rear wheel 162 includes a rim 261, which supports a tire The rear end of the frame includes a chain stay 163 and a seat stay 165, which may be supported by a rear suspension component 161, such as a rear shock.

The bicycle 150 includes a drive train 164, which is as group of components that deliver power from a drive input, such as a user input component 176 (e.g., pedals) and/or a drive unit 2 (e.g., electric motor), to a driven component such as the rear wheel 162. It should be understood that the driven component may include a front wheel, or the front and rear wheels, or some other component. Referring to FIGS. 1, 15, 16, the drive train 164 has an drive input 166, which includes a crank assembly 167, that is operatively coupled via a closed loop component 5 to a rear cassette 6 or a driven sprocket assembly mounted on a hub assembly 7 providing a rotation axis of the rear wheel 162, *i.e.,* the driven component. The closed loop component 5 may be configured as a chain, for example a roller chain, or a belt, toothed or toothless. A rear gear change device 137, such as a derailleur, may be disposed at the rear wheel 162, and connected for example to the frame 1, to move the roller chain 5 through different sprockets 361 of the cassette 6. In various embodiments, the cassette 6 includes a plurality of sprockets 361, each having different diameters and associated numbers of gear teeth that provide a plurality of gear ratios when coupled to a chain ring assembly 3 with the closed loop component 5. The sprockets 361 may have shift gates, for example features formed in the sprockets or sprocket structure, that interface with the closed loop component 5 to facilitate shifting between the sprockets 361. In one embodiment, a front gear changer device, such as a derailleur, may be connected to the frame to move the roller chain 5 through multiple sprockets of the chainring assembly.

As shown in FIG. 1, the arrow A depicts a normal riding or forward moving direction of the bicycle 150. While the bicycle 150 depicted in FIG. 1 is a mountain bicycle, the drive train, including the specific embodiments and examples disclosed herein as well as alternative embodiments and examples, may be implemented on other types of bicycles. For example and without limitation, the disclosed drive train may be used on road bicycles, and may be controlled/actuated by mechanical (e.g., cable, hydraulic, pneumatic, etc.) and non-mechanical (e.g., wired, wireless) actuator systems, including for example shifters.

### DRIVE TRAIN:

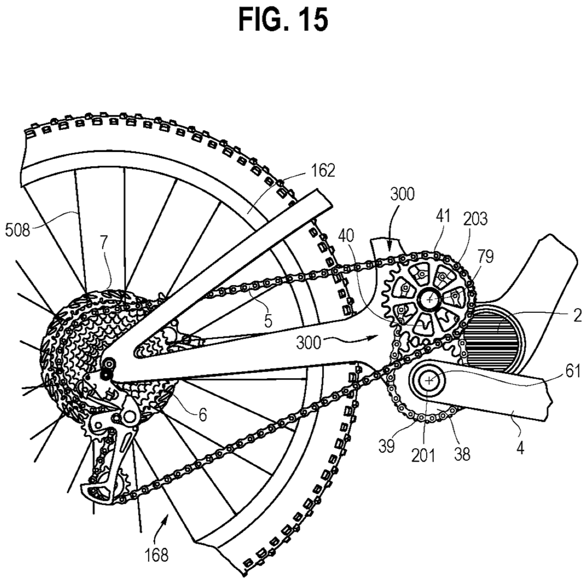

Referring to FIGS. 1, 15, 16, the crank assembly 167 includes a user input component. In one embodiment, the user input component includes at least one, and typically two, crank arms 4 and associated pedals 176, together with a front chainring assembly 3 or a drive sprocket assembly. A crank spindle 61, also referred to as a crank shaft 61, connects the two crank arms 4. The crank shaft 61 is coupled to an output shaft 79 with a gear train 300, 370. In the embodiment shown in FIG. 15, the rotation axes 201, 203 of the output shaft 79 and crank shaft 61 are spaced apart, while in the embodiment of FIG. 16, the output shaft 79 and crank shaft 61 are co-axial, and rotatable about the same rotational axis 2 of the chainring assembly 3.

In the embodiments of FIGS. 1, 15 and 16, the drive input for the drive train 164 includes both the user input component 4, 176 and the drive unit 2, although it should be understood that one or the other of the user input component and the drive unit may be idled such that only the other of the user input component and the drive unit is acting as the drive input.

The drive unit 2 is installed on the frame 1 of the bicycle. The drive unit 2 includes an electric motor 304 and a gear train 306 coupled between the motor 340 and the output shaft. Referring to FIG. 16, the drive unit 2 includes a housing 60 that may be mounted on the frame. The housing 60 has opposite sides 260 with openings, or bores 308, 310. A spindle bearing 63 and an output shaft bearing 86 are disposed in the bores 308, 310 and supported by the sides 260. A first end 312 of the output shaft 79 is supported by the second output shaft bearing 86, while a second end 314 of the output shaft 79 is supported by a first output shaft bearing 85, which is disposed on an outer surface 316 of the crank spindle 61. The output shaft 79 is rotatable relative to the housing 60 about the rotation axis 120. A second spindle bearing 64 is disposed in an inner bore 320 of the output shaft 79. The crank spindle 61 is supported by the first spindle bearing 63 and the second spindle bearing 64. The crank spindle 61 is rotatable relative to the housing 60 and the output shaft 79. The crank arms 4 are rotationally fixed to the crank spindle 61 by a spline interface, although the interface may also be configured as a socket and insert or other fastener. The phrase "rotationally fixed" means the two or more components are not rotatable relative to each other, even if the two or more components are rotatable together relative to another component. In this way, the spindle 61 is rotationally fixed to, and rotatable with, the crank arms 4. The crank arms 4 are axially retained to the spindle 61 with a pair of laterally spaced retaining nuts 62. Outer peripheries of a first bearing support structure 67 and a second bearing support structure 68 are disposed in an inner bore of the housing 60 and are preferably rotationally fixed to the housing 60 by a spline interface, pin(s), fastener or other structure. A first motor bearing 69 and a second motor bearing 70 are disposed in inner peripheries of the first bearing support structure 67 and the second bearing support structure 68, respectively.

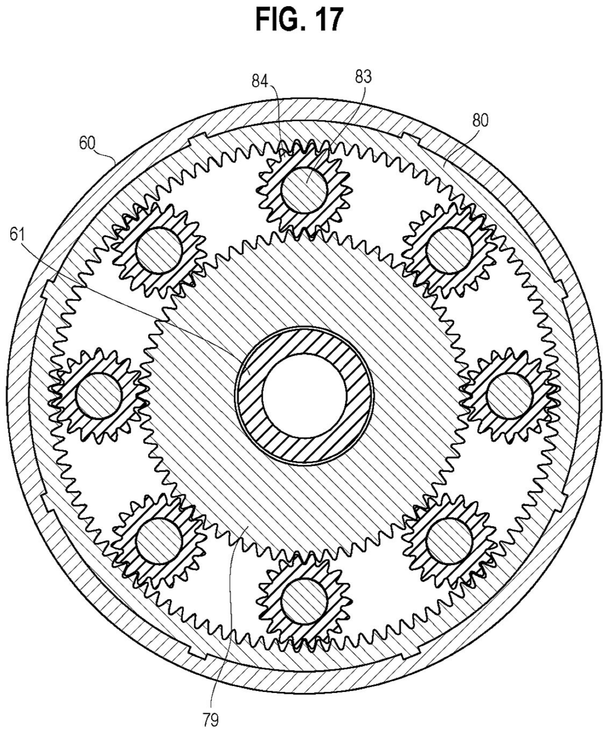

In one embodiment, the gear train 306 is configured as an epicyclic gear train. In one embodiment, the epicyclic gear train 306 has a first epicyclic gear stage 330 and a second epicyclic gear stage 332. In one embodiment, the first epicyclic gear stage 330 includes a sun gear 71, a planet carrier 74, a plurality of planet gears 72, and a ring gear 80. The sun gear 71 is engaged with and supported by the first and second motor bearings 69,70. The sun gear 71 is rotatable relative to the housing 60 about the rotational axis 120. The sun gear 71 has an outer circumferential surface 333 configured with a plurality of gear teeth 334. The motor 304 includes a rotor 66, which is rotationally fixed to the sun gear 71, for example with a spline interface or other fastener. The motor 304 also includes a stator 65 that is rotationally fixed to the housing 60, for example with a spline interface or other fastener. A ring gear 80 is laterally spaced from the motor 304 and is rotationally fixed to the housing 60, for example with a spline interface or other fastener, as shown for example in FIGS. 16 and 17. The ring gear 80 has an inner circumferential surface 340 configured with a plurality of gear teeth 342. The gear train 306 includes a plurality of circumferentially spaced planet gears 72, which are radially spaced from the rotational axis 120. Each of the planet gears 72 has an outer circumferential surface 346 configured with a plurality of gear teeth 348. The gear teeth 348 of the planet gears 72 are meshingly engaged with the gear teeth 342 of the ring gear 80. In one embodiment, the gear train 306, and the first gear stage 330 in particular, includes eight circumferentially spaced planet gears 72, although it should be understood that more or less planet gears may be used. Each of the planet gears 72 is rotatably supported by an axle 73. The axles 73 are mounted to a planet carrier 74. The gear teeth 348 of the planet gears 72 also are meshingly engaged with the gear teeth 334 of the sun gear 71.

The second epicyclic gear stage 332 includes a plurality of circumferentially spaced planet gears 75, which are radially spaced from the rotational axis 120. Each of the planet gears 75 has an outer circumferential surface 350 configured with a plurality of gear teeth 352, which are meshingly engaged with the gear teeth 342 of the ring gear 80. In one embodiment, the gear train 306, and the second gear stage 332 in particular, includes eight circumferentially spaced planet gears 75, although it should be understood that more or less planet gears may be used. Each of the planet gears 75 is rotatably supported by an axle 76, which are mounted to a planet carrier 77. The gear teeth of the second motor planets 75 are also meshingly engaged with gear teeth 360 on an outer circumferential surface 364 of a hub portion 362 extending axially from the planet carrier 74. Thus, the planet carrier 74, and the hub portion 362 in particular, functions as a sun gear for the second epicyclic gear stage 332, which includes the planet carrier 74, the planet carrier 77, the planet gears 75, and the ring gear 80. The planet carrier 74 is the output of the first epicyclic gear stage 330, and it is also the input of the second epicyclic gear stage 332.

A one-way motor clutch 78 is disposed between the planet carrier 77 and the output shaft 79. The motor clutch 78 may include spring-loaded pawls or the like. The motor clutch 78 is configured and arranged to transmit torque from the second motor planet carrier 77 to the output shaft 79, but is also configured and arranged so that torque from the output shaft 79 cannot be transmitted to the planet carrier 77. In other words, the planet carrier 77 drives the output shaft 79, but the output shaft 79 cannot drive the planet carrier 77.

Referring to FIGS. 16 and 17, the gear train 370 for the user input component is configured as an epicyclic gear train, which includes a plurality of planet gears 84, a planet carrier 82, the ring gear 80, and the output shaft 79. The plurality of planet gears 84 are circumferentially spaced, with each planet gear having an outer circumferential surface 372 configured with a plurality of gear teeth 374. The gear teeth 374 are meshingly engaged with the gear teeth 342 of the ring gear 80 and are also engaged with gear teeth 376 formed on an outer circumferential surface 378 of the output shaft 79. In one embodiment, the gear train 370 includes eight circumferentially spaced planet gear, although it should be understood that more or less planet gears may be used. Each of the planet gears is rotatably supported by a planet axle 83, which are mounted on a planet carrier 82. In one embodiment of the gear train, the ring gear 80 is rotationally fixed, the planet carrier 82 is the input, and the output shaft 79 is the output via the sun gear 71.

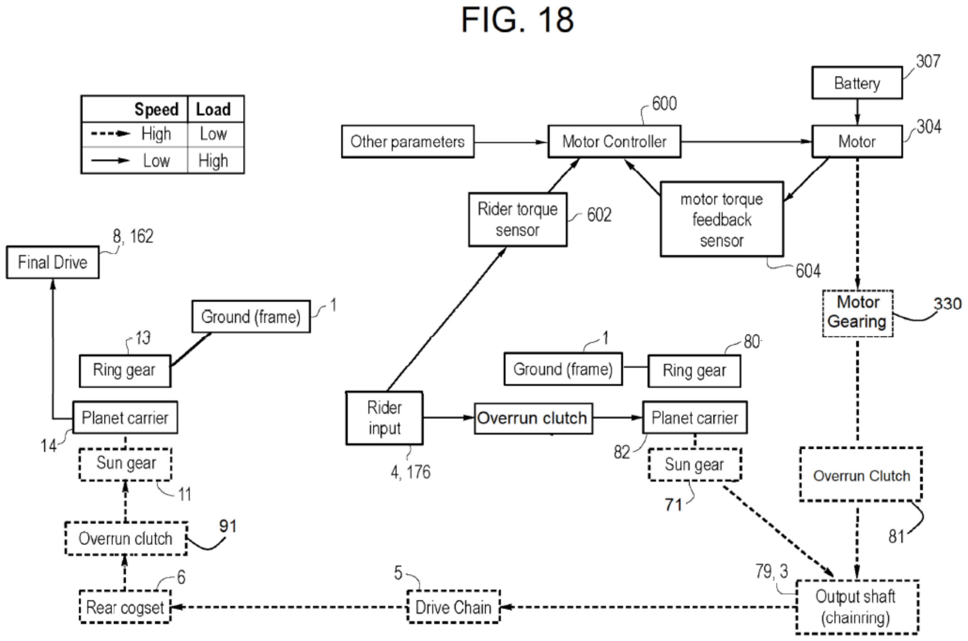

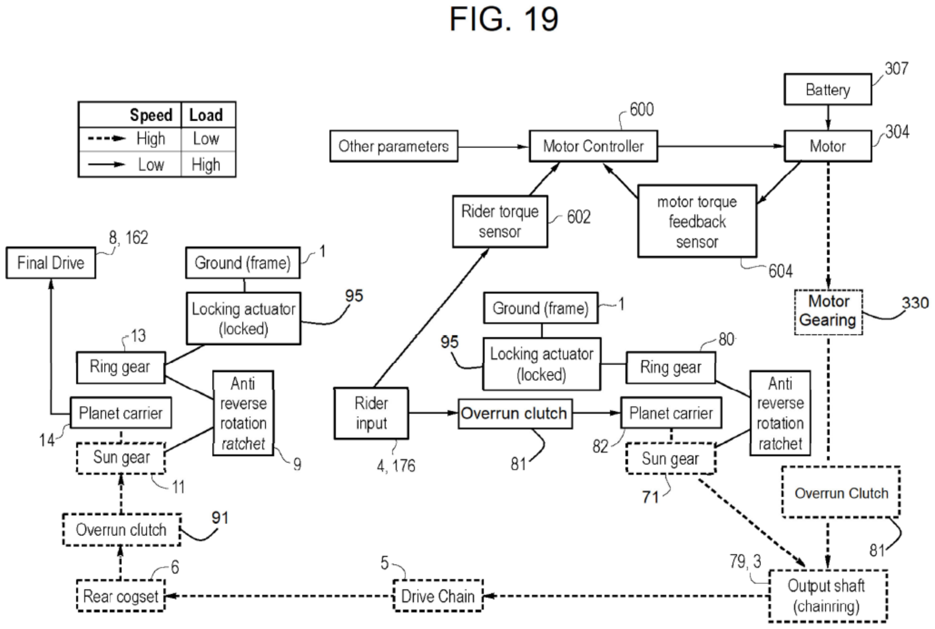

In one embodiment, the ring gear 80 has 108 teeth, the planet gears 84 have eighteen (18) teeth, and the output shaft 79 (via the sun gear 71) has sixty-eight (68) teeth. The gear ratio is defined as the ratio of the angular speed of the input relative to the output. In this embodiment, where the chain ring 3, or output, is rotating faster than the spindle shaft 61, or input, the gear ratio is less than 1:1. In particular, when the ring gear is held stationary and the sun gear is used as the output, the planet carrier will be the input, as shown in FIG. 18 and FIG. 19. The gear ratio in this case will be (Nsun)/(Nsun + Nring), or 68/(68+108) or 1:2.6, where N=number of gear teeth. In other embodiments, the gear ratio is between 1:2 and 1:3, and is preferably less than 1:1. It should be understood that others of the sun gear or ring gear may be the input, and others of the carrier and ring gear may be the output, to achieve a gear ratio between the input and output of less than 1:1. The gear train may include a one-way clutch 81 disposed between the crank spindle 61 and the rider planet carrier 82. The clutch 81 is configured and arranged to transmit torque from the spindle 61 to the planet carrier 82, and is also configured and arranged so that torque from the planet carrier 82 cannot be transmitted to the spindle 61. In other words, the crank spindle 61 can drive the planet carrier 82, but the planet carrier 82 cannot drive the crank spindle 61.

Referring to FIG. 16, a chain ring 3 is rotationally fixed to the output shaft 79, for example with a spline interface, socket interface or other fastener, and is axially retained to the output shaft 79 by a chain ring locknut 87. Thus, the chain ring 3 is rotationally fixed to, and rotatable with, the output shaft 79 about the rotation axis 120.

Referring to FIG. 15, another embodiment of a gear train 300 coupled between the crank arms 4 and the chain ring 3 is shown. In this embodiment, the gear train 300 includes a chain ring 38 rotationally fixed to the crank arms 4. In one embodiment, the chain ring 38 has an outer periphery configured with a plurality of teeth. In one embodiment, the chain ring 38 has 40 teeth. The gear train 300 includes a sprocket gear 40 that is rotatably mounted on the bicycle frame about the rotation axis 203, for example on the axle 79 defining the axis 203. The axis 203 is parallel to, but spaced apart from, the axis 201 of rotation of the crank arms 4. The sprocket gear 40 has sixteen (16) teeth in one embodiment. A closed loop component 39, such as a chain or belt, is engaged with both the chain ring 38 and the sprocket gear 40. A chain ring 41 is rotationally fixed to the sprocket gear 40. In one embodiment, the chain ring 41 has the same number of teeth as the chain ring 3. In this gear train, the driver component, or chain ring 38 makes one revolution for every four revolutions of the sprocket gear 40 and chain ring 41, such that the gear ratio is 1:4, or less than 1:1. The closed loop component 5, such as a chain or belt, may be engaged with both the chain ring 41 and one of the sprocket gears on the cassette 6, depending on the position of the rear derailleur. In this embodiment the drive unit 2 may be coupled to the output shaft 79, for example with a gear train 306.

In an alternative embodiment, the gear train between the user input component and the chain ring may include a spur gear, which may be rotationally fixed to the crank arms and mesh directly with a pinion gear mounted to the axle and rotationally fixed to the chain ring. The first and second spur gears provide a gear ratio less than 1:1. In another embodiment, the gear train may include a pair of pulleys connected with a belt, with the input pulley, connected to the crank arms, having a greater diameter than an output pulley, connected to the chain ring 41. In other embodiments, the gear train may be configured with more than one set of chain rings and sprockets, spur and pinion gears (whether meshing or connected with belts), and/or pulleys and belts, or the great train may be configured with combinations of chain rings, sprockets, spur and pinion gears, and/or pulleys and belts, the combination of which results in a gear ratio less than 1:1 between the input (e.g., shaft 61) and the output (e.g., chain ring 3, 41).

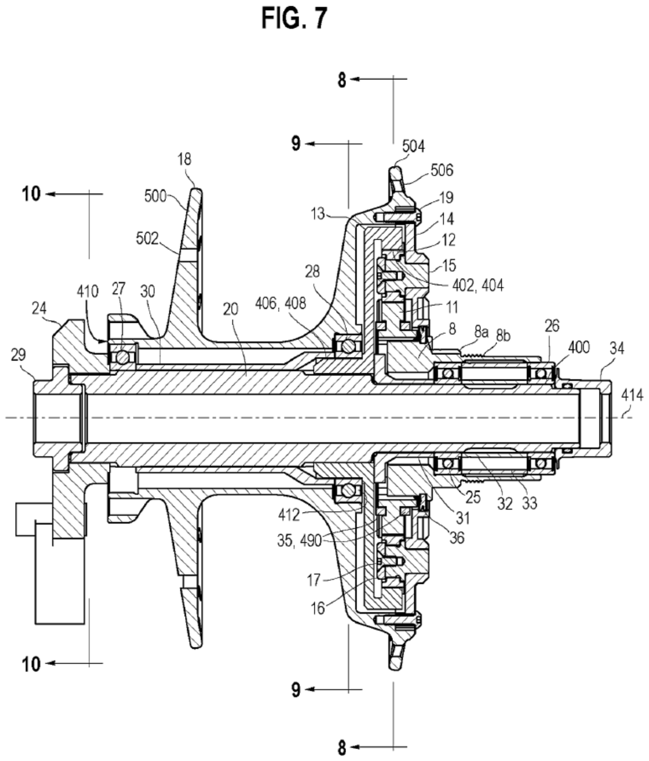

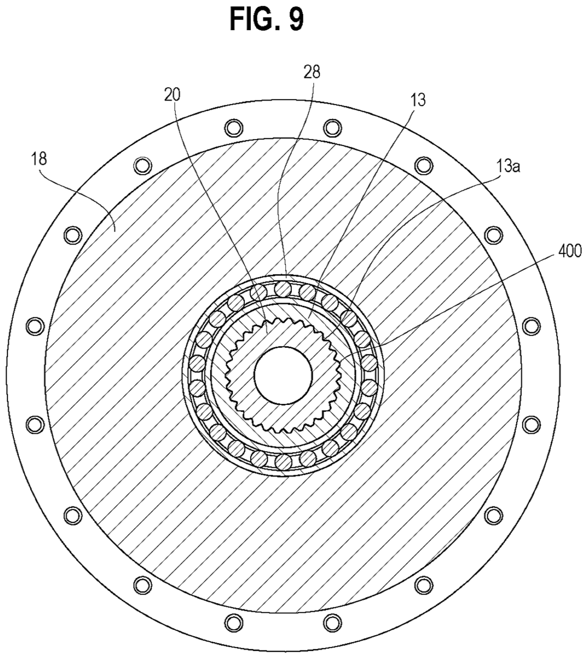

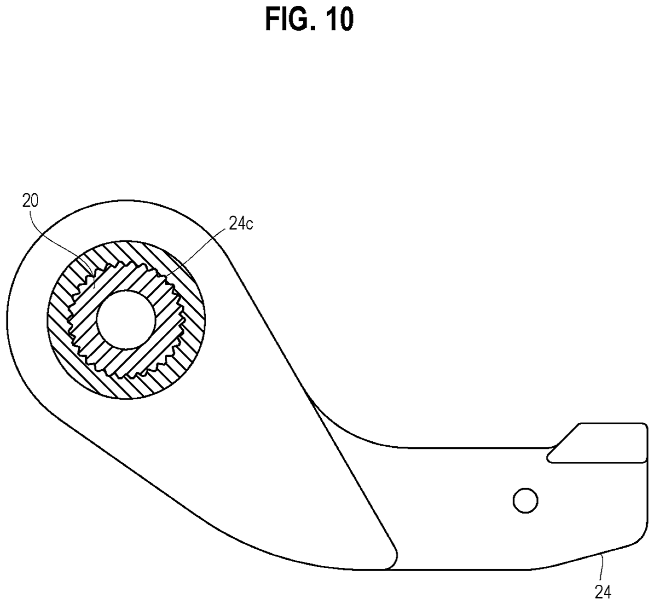

Referring to FIGS. 7-11, a bicycle wheel hub assembly 7 includes a driver 8 rotationally supported on an outer peripheral surface 400 of a hub axle 20 with an inboard bearing 25 and an outboard bearing 26. The driver 8 may be configured as a shaft, and have a tubular construction with inner and outer circumferential surfaces. The axle 20 is non-rotatable, or rotationally fixed relative to the frame 1 and is preferably made of aluminum. The bearings 25, 26 are laterally or axially spaced by an inner spacer 32 and an outer spacer 33. In one embodiment, the spacers 32, 33 are tubular and are mounted coaxially on the hub axle 20. The driver 8 is rotatably supported by the outer races of the bearings 25, 26, such that the driver 8 is rotatable relative to the hub axle 20 about an axis 414. A spacer 34 abuts the inner race of the outboard bearing 26.

Again referring to FIGS. 7-10, a non-rotatable ring gear 13 is rotationally fixed to the hub axle 20, for example with a spline interface 13a, including a splined inner surface that engages with a complementary splined surface on the outer surface 400 of the hub axle 20. Thus, the ring gear 13 is rotationally fixed to the hub axle 20. In one embodiment, the ring gear 13 has an inner circumferential surface 402 configured with a plurality of teeth 404. In one embodiment, the inner surface 402 includes one hundred eight (108) teeth, although it should be understood that the ring gear 13 may have more or less teeth. A spacer 31 separates the ring gear 13 from a laterally spaced inner race of the inboard bearing 25. A non-drive side bearing 27 is disposed on and supported by the outer surface 400 of the hub axle 20, and a drive side bearing 28 is disposed on and supported by an outer circumferential surface 406 of a laterally extending hub portion 408 of the ring gear 13. Outer races of the bearings 27, 28 are disposed in laterally spaced bores 410, 412 formed in ends of the hub shell 18. Thus, the hub shell 18 is rotatable relative to the hub axle 20 about the axis 414 defined by the hub axle 20. A spacer 30 abuts and separates the laterally spaced inner races of the bearings 27, 28.

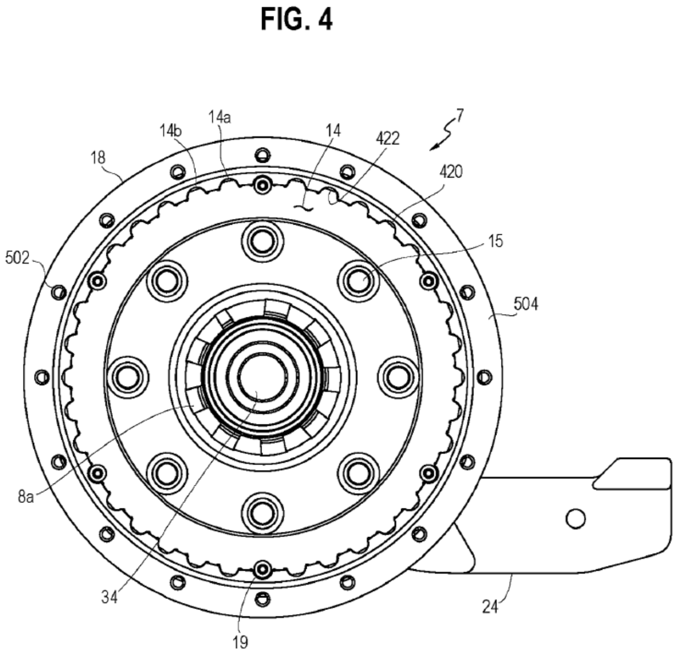

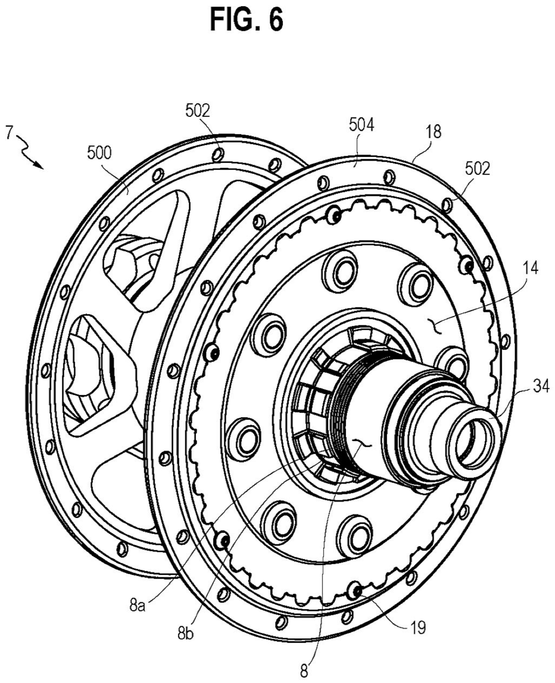

Referring to FIGS. 4, 6 and 7, a planet carrier 14 has a scalloped outer periphery 14a engaged with a complementary scalloped inner periphery 14b of the hub shell 18. Protuberances 420 on the carrier are engaged with recesses 422 in the shell, although the protuberances and recesses may be reversed. A plurality of fasteners 19, shown as six (6) screws, are disposed through holes in the planet carrier 14 and threadably engage holes in the hub shell 18. Thus, the planet carrier 14 is rotationally fixed to the hub shell 18, and is rotatable therewith about the axis 414.

A plurality of circumferentially spaced axles 15 are coupled to the carrier 14 and are radially spaced from the axis 414. The axles 15 may be coupled to a web of the carrier 14 by threading or press fit. The axles 15 are rotationally fixed to, and rotatable with, with the planet carrier 14 about the axis 414. Alternatively, more or fewer planet axles 15 may be used.

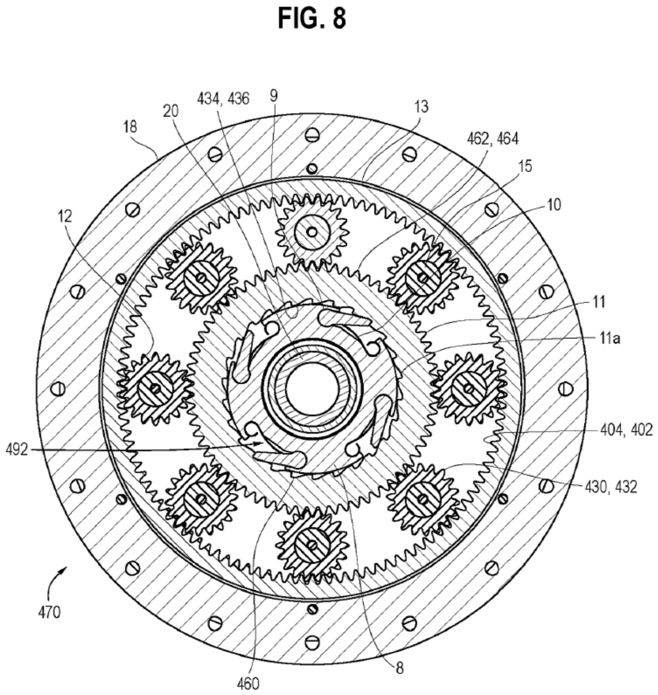

Referring to FIGS. 7 and 8, a planet gear 12 is mounted on each axle 15 and rotates about an axis defined by the axle 15. Thus, the planet gears 12 are rotatable relative to the planet axles 15, and the number of planet gears 12 is equal to the number of planet axles 15. Each planet gear 12 is axially retained on a respective planet axle 15 by a planet axle cap 16 that is screwed to its planet axle 15 by a fastener 15, e.g., a screw. Each planet gear 12 includes a plurality of teeth 430 on an outer circumferential surface thereof. The gear teeth 430 of the planet gears meshingly engage with the gear teeth 404 of the ring gear 13. In one embodiment, each planet gear 12 has eighteen (18) teeth 430, although it should be understood that more or less teeth may be provided.

A sun gear 11 has an inner circumferential surface 434 configured with a plurality of teeth 436. The sun gear 11 is rotatably supported by an outer circumferential surface 460 of the driver 8. The sun gear 11 has an outer circumferential surface 462 configured with a plurality of gear teeth 464, which meshingly engage the gear teeth of the planet gears 12. In one embodiment, the sun gear 11 has sixty eight (68) gear teeth 464, although it should be understood that the sun gear may be configured with more or less gear teeth. Thus, the sun gear 11, planet gears 12 and ring gear 13 together form an epicyclic gear train 470 in which the ring gear 13 is stationary relative to the hub axle 20, the driver 8 and sun gear 11 function as an input into the gear train, and the planet carrier 14 and shell 18 function as an output of the gear train 470. In this embodiment, where the driver 8 is rotating faster than the shell 18, the gear ratio is greater than 1:1. In particular, when the ring gear 13 is held stationary and the sun gear 11 is used as the input, the planet carrier 14 will be the output. The gear ratio in this case will (Nsun + Nring)/Nsun, or (68+108)/68, or 2.59:1 or 2.6:1, or greater than 1:1. In one embodiment, the gear ratio is between 2:1 and 3:1. It should be understood that the carrier may be the input, and the ring gear the output, or the sun gear the input, and the ring gear the output, or the sun gear the input, and the carrier the output (as shown in FIG. 18 and FIG. 19) to achieve a gear ratio between the input and output of greater than 1:1. With a gear ratio of approximately 2.59:1, every time the sun gear 11 rotates 2.59 times, the planet carrier 14 rotates once. Alternatively, other gear ratios can be used. Also, as described previously, the gear train 470 may be configured with multiple gear stages, and may include one or more spur and pinion gears with offset axes, or pulleys and belts, the combination of which results in a gear ratio greater than 1:1 between the input (e.g., driver 8) and the output (e.g., hub shell 18).

The gear train may include a one-way clutch 91 disposed between the rear cogset 6 (via the driver 8) and the sun gear 11. The clutch 91 is configured to transmit torque from the rear cogset 6 to the sun gear 11, and is also configured so that torque from the sun gear 11 cannot be transmitted to the rear cogset 6. In other words, the rear cogset 6 can drive the sun gear 11, but the sun gear 11 cannot drive the rear cogset 6.

The gear train 470, coupled between the driver 8 and the shell 18 is non-adjustable, meaning the gear train 470 has a fixed gear ratio between the driver 8 and the hub shell 18 when the gear train 470 is engaged. In one embodiment, the term "non-adjustable" refers to the hub being free of any axially displaceable components, meaning the driver, sun gear, carrier, ring gear and hub are all axially fixed relative to each other. That said, it is contemplated that the gear train 470, which is non-adjustable, may also be disengaged. For example, the ring gear may be released from ground or the connection to the axle 20, and allowed to rotate. A ratchet mechanism 9 may be disposed between the ring and sun that prevents reverse relative rotation between the sun gear and the ring gear, thereby locking out the gear train, with the driver 8 driving the hub 18 at a 1:1 gear ratio. A similar feature may be incorporated in the gear train 370, which may be beneficial, for example, when the motor 304 is disabled, for example when the battery runs low. In another embodiment, when engaged, the gear ratio is always greater than 1:1. In an embodiment, as shown in FIG. 19, an actuator 95 (or locking actuator) allows a rider to reversibly disengage any one or a combination of the gear trains 370, 470 so that the respective gear train operates at a 1:1 ratio. The actuator 95 can be mounted on the bicycle so that it is easily operated by the rider, such as on the handlebar, top tube, head tube, stem, or down tube of the bicycle. The actuator 95 may be physically connected to the gear train (e.g., via a cable) to physically reversibly disengage the gear train so that it operates at a 1:1 ratio. The actuator 95 may also be a wireless controller that is wirelessly connected to a corresponding wireless receiver in the gear train 370, 470, that is configured to reversibly disengage the corresponding gear train so that it operates at a 1:1 ratio. The wireless controller may be integrated into a head unit or multi-purpose wireless control device so that a separate wireless controller for reversibly disengaging the gear train is not required.

Referring to FIG. 7, a spacer 35 is disposed on a shoulder 490 on each lateral side of the sun gear 11. The spacers 35 may be made of a soft material like acetal or nylon, and prevent the metal side surfaces of the sun gear 11 from contacting metal side surfaces of other components in the system in the event that the sun gear 11 moves slightly in the axial direction. A rubber seal 36 is disposed in a groove in the driver body 8, and blocks foreign debris from entering the system via the gap between the driver body 8 and the planet carrier 14.

Referring to FIG. 8, a plurality of circumferentially spaced pawls 9 are pivotally connected to the drive body. In one embodiment, four evenly spaced pawls 9 are seated in pawl recesses 492 in the driver body 8 in a conventional manner. Each pawl 9 has a corresponding pawl spring 10 that is also disposed in each pawl recess 492. The pawl springs 10 are configured to bias the tips of the pawls 9 radially outward into engagement with the teeth 436 defining a toothed inner profile 11a of the sun gear 11. In one embodiment, only a subset of the plurality of pawls 9, shown as two of four pawls for example, actively engaging the teeth 436 of the sun gear 11, while the other two pawls are disengaged from the teeth. The number of teeth 436 on the toothed inner profile 11a of the sun gear 11 is selected such that one pair of pawls (opposite each other) is "out of phase" with the other pair of pawls, resulting in a smaller maximum angle that the driver body 8 must rotate through in order for a pair of pawls 9 to engage the teeth in the sun gear 11. Preferably, the number of teeth 436 in the toothed inner profile 11a of sun gear 11 is 26. The pawls 9 engage the sun gear 11 in only one rotational direction, but are disengaged with the sun gear in the opposite rotations direction.

Referring to FIGS. 7, 10 and 12, a non-rotatable torque arm 24, or frame engaging feature, has a splined inner profile 24c or inner circumferential surface that engages a complementary splined profile on an outer circumferential surface of the hub axle 20. The spline interface rotationally fixes, the torque arm 24 to the hub axle 20. A non-drive side spacer 29 is disposed in a recess in an end of the hub axle 20.

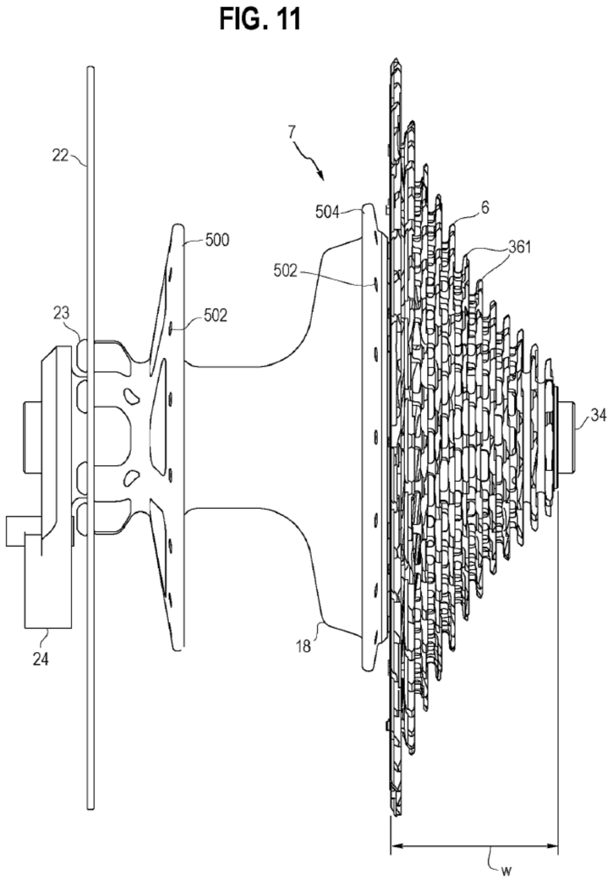

Referring to FIG. 11, a brake rotor 22 is fixed to the hub shell 18 of the rear hub assembly 7. A plurality of fasteners, shown as six (6) bolts 23, couple the brake rotor 22 to the hub shell 18. The cassette 6 is rotationally fixed to the driver 8. In one embodiment, a threaded element of the cassette 6 is threaded onto a threaded portion 8b of the driver body 8 and a female spline in the cassette 6 engages a corresponding male spline 8a on the driver body 8. The spline interface 8a and threaded portion 8b define mating features for the cassette, with the spline interface 8a rotationally fixing the cassette 6 to the driver body 8. The driver body 8 has a cassette receiving portion 363, including the spline interface 8a and threaded portion 8b, that extends axially from the hub shell and has a length (L) suitable to accommodate a cassette 6 configured with a plurality of sprockets 361 having different teeth configurations. In one embodiment, the cassette 6 has a width (W). In various embodiments, the cassette 6 includes at least two (2) sprockets, but may have any suitable number of sprockets 361, including for example twelve (12) sprockets as shown in FIG. 11. The cassette 6 may be configured as a stand-alone subassembly, or the sprockets 361 may be individually mounted on the driver.

The hub shell 18 also includes a pair of laterally spaced annular spoke flanges 500, 504, each having a plurality of circumferentially spaced openings 502, 506, or wheel attachment features. In one embodiment, the wheel includes spokes 508, which are coupled or attached to the flanges 500, 504 with end portions that are inserted through the openings 502, 506, thereby attaching the wheel 162 to the hub shell 18. It should be understood that the wheel 162 may be attached to the hub assembly with spokes, or a web, that are integrally formed, such that the hub shell and wheel are integral. In this embodiment, the portion of the shell that is connected to the features that extend between the hub shell and the rim of the wheel may be considered the wheel attachment feature.

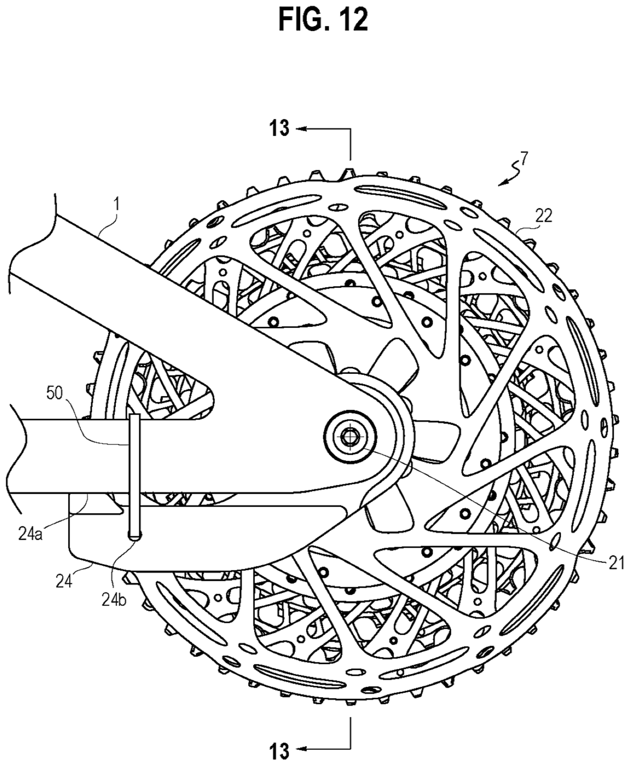

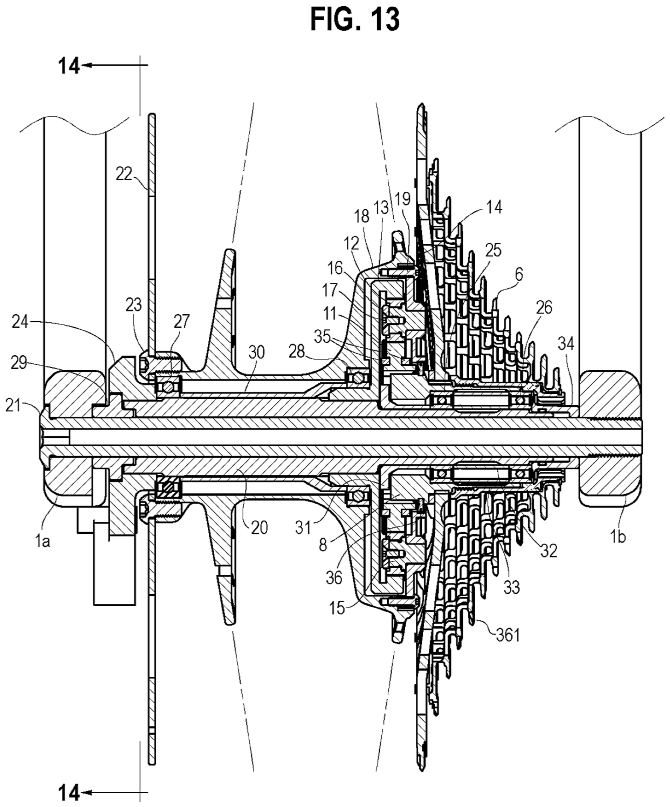

As shown in FIGS. 12 and 13, The rear hub assembly 7 is coupled to the frame 1 with a thru axle 21. The torque arm 24 of the rear hub assembly 7 has a surface 24a that abuts a lower surface of a chain stay 163 portion of the bicycle frame 1. Optionally, a zip tie 50 may be passed through a hole 24b in the torque arm 24 and secured to the chain stay 163 to ensure that the surface 24a of the torque arm 24 remains in contact with the bicycle frame 1. The thru axle 21 passes through a hole in left frame member 1a of the frame 1, and passes through the hollow hub axle 20 of hub assembly 7, and is threaded into a threaded hole in a right frame member 1b of the frame 1. When the thru axle 21 is tightened, the axle 21 axially compresses the left side frame member 1a, the non-drive side spacer 29, the torque arm 24, the inner race of the non-drive side hub shell bearing 27, the hub shell bearing spacer 30, the inner race of the drive side hub shell bearing 28, the ring gear 13, the ring gear spacer 31, the inner race of the driver body inboard bearing 25, the driver body inner spacer 32, the inner race of the driver body outboard bearing 26, the drive side spacer 34, and the right side frame member 1b of the frame 1.

### OPERATION:

A method of propelling the bicycle 150 includes rotating the crank arms 4 about a first axis 120, 201 at a first rotational speed, simultaneously rotating the chain ring 3, 41 coupled to the crank arms, by way of a gear train, about a second axis 120, 203, which may be coaxial with the first axis 120, at a second rotational speed greater than the first rotational speed, simultaneously rotating a gear (e.g., the cassette 6) about a third axis 414 at a third rotational speed, wherein the gear 6 is coupled to the chain ring 3, 41 with a closed loop component 5, and simultaneously rotating a wheel 162 about the third axis 414 at a fourth rotational speed less than the third rotational speed.

In particular, and referring to the embodiment of FIGS. 1, 16, 18 and 19, when the rider pedals (i.e. rotates) the crank arms 4, the crank arms 4 drive the spindle 61. The spindle 61, acting through the rider clutch 81, drives the rider planet carrier 82. The rider planet carrier 82 drives the rider planet axles 83, which in turn drive the rider planets 84. The rider planet carrier 82, the rider planets 84, the ring gear 80, and the output shaft 79 together form an epicyclic gear train 370. Since the ring gear 80 is fixed (i.e. prevented from rotating), the planet gears 84 drive the output shaft 79 at a faster angular velocity than the angular velocity of the rider planet carrier 82. As previously described, the gear ratio is approximately 1:2.6, meaning that the output shaft 79 rotates 2.6 times faster than the rider planet carrier 82. The output shaft 79 drives the chain ring 3. Therefore, the chain ring 3 rotates 2.6 times faster than the cranks 4. At the same time, the chain ring 3 drives the bicycle chain 5. The bicycle chain 5 drives the cassette 6, through engagement of any of the sprockets on the cassette.

Now referring to the embodiment of FIG. 15, in operation, the rider pedals the cranks 4 at a first angular velocity. Since the chain ring 38 is fixed to the cranks 4, the chain ring 38 also rotates at the first angular velocity. The chain ring 38 drives the first chain 39. The first chain 39 drives the sprocket 40. Since the ratio of the number of teeth on the chain ring 38 to the number of teeth on the sprocket 40 is 40:16, or 2.5:1, the first sprocket 40 rotates at a second angular velocity that is 2.5 times faster than the first angular velocity. Since the chain ring 41 is fixed to the first sprocket 40, the second chain ring 41 also rotates 2.5 times faster than the first angular velocity. Thus, the second chain ring 41 rotates 2.5 times faster than the cranks 4. The second chain ring 41 drives the chain 5, and the chain 5 drives the cassette 6.

Now referring to FIGS. 8 and 13, the cassette 6 drives the driver body 8. The driver body 8 is driven clockwise by the cassette 6. One of the pairs of pawls 9 on the driver body 8 engages the toothed inner profile 11a of the sun gear 11, thus driving the sun gear 11 clockwise. The sun gear 11 drives the planet gears 12 and the planet carrier 14 in the clockwise direction, but at a rotational angular velocity that is slower than the sun gear 11. A reaction force exerted by the planet gears 12 on the ring gear 13 applies a counterclockwise torque to the ring gear. The ring gear 13 is rotationally fixed, however, due to the coupling to the hub axle 20. The hub axle 20 is prevented from rotating by way of engagement of the frame 1 by the torque arm 24, the surface of which abuts the bicycle frame 1. In other words, the reaction torque acting on the fixed ring gear 13 passes from the ring gear 13, through the hub axle 20, through the torque arm 24, and into the bicycle frame 1.

The planet carrier 14 drives the hub shell 18 in the clockwise direction. The hub shell 18 drives the rear wheel 162 clockwise (i.e. the forward driving direction of the bicycle) via the wheel spokes 508.

Preferably (but not necessarily), the drive unit 2 also contains the previously described electric motor 304, which assists the rider in pedaling as follows. As shown in FIG. 16 and 18, the motor stator 65 receives electrical power from the battery 307. In response to the magnetic field created by the stator 65, the motor rotor 66 spins in the driving rotational direction. The motor rotor 66 drives the sun gear 71. As previously described, the sun gear 71 is the input of a first epicyclic gear stage 330 of the gear train, which includes the sun gear 71, the first motor planet carrier 74, the first motor planets 72, and the ring gear 80. Since the ring gear 80 is fixed, the first motor planet carrier 74 is driven at a slower rate than the sun gear 71, but with increased torque. The first motor planet carrier 74 is also the input (i.e. the sun gear) of the previously described second epicyclic gear stage, consisting of the first motor planet carrier 74, the second motor planet carrier 77, the second motor planets 75, and the ring gear 80. Since the ring gear 80 is fixed, the second motor planet carrier 77 is driven at a slower angular velocity than the first motor planet carrier 74, but with increased torque. The second motor planet carrier 77 drives the output shaft 79 through the motor clutch 78. As previously described, the output shaft 79 drives the chain ring 3. Thus, the electric motor 304 is able to assist the rider in driving the chain ring 3.

It should be noted that in the event that the motor 304 is unable to assist the rider (for example, if the battery loses power), the motor clutch 78 will be "over run" by the rider's pedaling, meaning that when the output shaft 79 is driven by the rider, the output shaft 79 does not drive the first and second epicyclic gear stages 330, 332 (i.e. the motor gear stages), thus eliminating undesirable pedaling drag that would arise if the motor epicyclic gear stages were required to rotate.

It should also be noted that the rider clutch 81 prevents the electric motor 304 from driving the pedal cranks 4. The rider clutch 81 allows the spindle 61 to be "over run" by the rider planet carrier 82. In other words, even though the rider planet carrier 82 is driven by the motor 304, the rider planet carrier 82 is not able to drive the spindle 61, thanks to the configuration of the rider clutch 81.

A motor controller 600 is operatively connected to the motor 304. A rider torque sensor 603, applied for example to the chain ring, provides input to the motor controller 600 regarding the torque input of the user. Likewise, a motor torque feedback sensor 604 provides input to the motor controller 600 regarding the torque input of the motor 304. In this way, the controller 600 can adjust and modify the power supplied by the motor 304 relative to the torque input of the user.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

Although embodiments have been described for illustrative purposes, those skilled in the art will appreciate that various modifications, additions, and substitutions are possible, without departing from the scope and spirit of the disclosure. It is therefore intended that the foregoing description be regarded as illustrative rather than limiting, and that it be understood that all equivalents and/or combinations of embodiments and examples are intended to be included in this description.

Although certain parts, components, features, and methods of operation and use have been described herein in accordance with the teachings of the present disclosure, the scope of coverage of this patent is not limited thereto. On the contrary, this patent covers all embodiments of the teachings of the disclosure that fairly fall within the scope of permissible equivalents.

### Aspects of the Invention

In the following, aspects of the invention are summarized

Aspect 1. A bicycle wheel hub comprising:
a driver rotatable about an axis at a first rotational speed, the driver comprising a mating feature configured to engage a cassette;
a shell comprising a wheel attachment feature, wherein the shell is rotatable about the axis at a second rotational speed; and a non-adjustable gear train coupled between the driver and the shell, wherein the gear train defines a single fixed gear ratio between the driver and the shell, wherein the gear ratio is greater than 1:1 such that the second rotational speed is less than the first rotational speed.

Aspect 2. The bicycle wheel hub of aspect 1, comprising a non-rotatable axle defining the axis, wherein the shell and the driver are rotatably supported by the axle.

Aspect 3. The bicycle wheel hub of aspect 2, comprising a torque arm non-rotatably engaged with the axle, wherein the torque arm comprises a frame engaging feature configured to engage the frame to restrict rotation of the axle.

Aspect 4. The bicycle wheel hub of aspects 2 or 3, wherein the gear train comprises a sun gear, a ring gear surrounding the sun gear and a plurality of planet gears disposed between and meshing with the sun gear and the ring gear, wherein the plurality of planet gears are rotatably mounted on a planet carrier, wherein one of the ring gear, the planet carrier or the sun gear is non-rotatably fixed to the axle, wherein one of the planet carrier, the planet carrier or the ring gear is coupled to and rotatable with the shell, and wherein one of the sun gear, the planet carrier or the ring gear is engageable with and rotatable by the driver in at least one rotational direction,
wherein as an optional feature:
- the ring gear is fixed to the axle,
- the planet carrier is coupled to and rotatable with the shell and
- the sun gear is engageable with and rotatable by the driver in at least one rotational direction.

Aspect 5. The bicycle wheel hub of aspect 4, further comprising a ratchet disposed between the sun gear and the driver, wherein the ratchet is engaged between the driver and the sun gear in a first rotational direction, wherein the sun gear is engaged with and rotatable by the driver in the first rotational direction, and wherein the ratchet is disengaged between the driver and the sun gear in a second rotational direction opposite the first rotational direction, wherein the sun gear is disengaged from and nonrotatable by the driver in the second rotational direction.

Aspect 6. The bicycle wheel hub of aspect 5, wherein the ratchet comprises a pawl coupled to one of the driver or the sun gear, and wherein the other of the driver or the sun gear comprises a plurality of teeth, further comprising as an optional feature a spring biasing the pawl into engagement with at least one of the plurality of teeth.

Aspect 7. The bicycle wheel hub of aspect 6, wherein the pawl is pivotally coupled to the driver and the spring is mounted on the driver, wherein the spring biases the pawl radially outwardly, and wherein the sun gear comprises the plurality of teeth formed around an inner circumferential surface of the sun gear.

Aspect 8. The bicycle wheel hub of one of the preceding aspects, wherein the gear ratio is between 2:1 and 3:1.

Aspect 9. A bicycle drive train comprising:
a drive unit comprising:
   a user input component rotatable about a first axis at a first rotational speed;
   a chain ring rotatable about a second axis at a second rotational speed; and
   a first gear train coupled between the user input component and
   the chain ring, wherein the first gear train defines a first gear ratio between the user input component and the chain ring, wherein the first gear ratio is less than 1:1 such that the second rotational speed
   is greater than the first rotational speed;
a bicycle wheel hub comprising:
   a driver rotatable about a third axis at a third rotational speed; a gear coupled to and rotatable with the driver about the third axis at the third rotational speed;
   a shell comprising a wheel attachment feature, wherein the shell is rotatable about the third axis at a fourth rotational speed; and a second gear train coupled between the driver and the shell, wherein the second gear train defines a second gear ratio between the driver and the shell, wherein the second gear ratio is greater than 1:1 such that the fourth rotational speed is less than the third rotational speed; and
a closed loop component connecting the chain ring and the gear.

Aspect 10. The bicycle drive train of aspect 9, wherein the first gear ratio is an inverse of the second gear ratio.

Aspect 11. The bicycle drive train of aspect 9 or 10, wherein the first axis and the second axis are coaxial.

Aspect 12. The bicycle drive train of one of aspects 9 to 11, wherein the user input component comprises a crank connected to a spindle defining the first axis.

Aspect 13. The bicycle drive train of one of aspects 9 to 12, wherein the second gear train comprises an epicyclic gear train, wherein as an optional feature the first gear train comprises an epicyclic gear train.

Aspect 14. The bicycle drive train of one of aspects 9 to 13, further comprising an output shaft coupled to the chain ring, wherein the first gear train is coupled between the user input component and the output shaft, further comprising as an optional feature a motor coupled to the output shaft.

Aspect 15. The bicycle drive train of aspect 14, further comprising a third gear train coupled between the motor and the output shaft, wherein as an optional feature the third gear train comprises an epicyclic drive train.

## Claims

1. A bicycle drive train comprising:
a drive unit comprising:
a user input component rotatable about a first axis at a first rotational speed;
a chain ring rotatable about a second axis at a second rotational speed; and
a first gear train coupled between the user input component and the chain ring, wherein the first gear train defines a first gear ratio between the user input component and the chain ring, wherein the first gear ratio is less than 1:1 such that the second rotational speed is greater than the first rotational speed;
a bicycle wheel hub comprising:
a driver rotatable about a third axis at a third rotational speed;
a gear coupled to and rotatable with the driver about the third axis at the third rotational speed;
a shell comprising a wheel attachment feature, wherein the shell is rotatable about the third axis at a fourth rotational speed;
and
a second gear train coupled between the driver and the shell, wherein the second gear train defines a second gear ratio between the driver and the shell, wherein the second gear ratio is greater than 1:1 such that the fourth rotational speed is less than the third rotational speed; and
a closed loop component connecting the chain ring and the gear.

2. The bicycle drive train of claim 1, wherein the first gear ratio is an inverse of the second gear ratio.

3. The bicycle drive train of claim 1 or 2, wherein the first axis and the second axis are coaxial.

4. The bicycle drive train of one of claims 1 to 3, wherein the user input component comprises a crank connected to a spindle defining the first axis.

5. The bicycle drive train of one of claims 1 to 4, wherein the second gear train comprises an epicyclic gear train,
wherein as an optional feature the first gear train comprises an epicyclic gear train.

6. The bicycle drive train of one of claims 1 to 5, further comprising an output shaft coupled to the chain ring, wherein the first gear train is coupled between the user input component and the output shaft,
further comprising as an optional feature a motor coupled to the output shaft.

7. The bicycle drive train of claim 6, further comprising a third gear train coupled between the motor and the output shaft,
wherein as an optional feature the third gear train comprises an epicyclic drive train.

8. The bicycle drive train of one of the preceding claims, further comprising a non-rotatable axle defining the axis, wherein the shell and the driver are rotatably supported by the axle.

9. The bicycle drive train of claim 8, comprising a torque arm non-rotatably engaged with the axle, wherein the torque arm comprises a frame engaging feature configured to engage the frame to restrict rotation of the axle.

10. The bicycle drive train of claim 8 or 9, wherein the gear train comprises a sun gear, a ring gear surrounding the sun gear and a plurality of planet gears disposed between and meshing with the sun gear and the ring gear, wherein the plurality of planet gears are rotatably mounted on a planet carrier, wherein one of the ring gear, the planet carrier or the sun gear is non-rotatably fixed to the axle, wherein one of the planet carrier, the planet carrier or the ring gear is coupled to and rotatable with the shell, and wherein one of the sun gear, the planet carrier or the ring gear is engageable with and rotatable by the driver in at least one rotational direction,
wherein as an optional feature:
• the ring gear is fixed to the axle,
• the planet carrier is coupled to and rotatable with the shell and
• the sun gear is engageable with and rotatable by the driver in at least one rotational direction.

11. The bicycle drive train of claim 10, further comprising a ratchet disposed between the sun gear and the driver, wherein the ratchet is engaged between the driver and the sun gear in a first rotational direction, wherein the sun gear is engaged with and rotatable by the driver in the first rotational direction, and wherein the ratchet is disengaged between the driver and the sun gear in a second rotational direction opposite the first rotational direction, wherein the sun gear is disengaged from and nonrotatable by the driver in the second rotational direction.

12. The bicycle drive train of claim 11, wherein the ratchet comprises a pawl coupled to one of the driver or the sun gear, and wherein the other of the driver or the sun gear comprises a plurality of teeth,
further comprising as an optional feature a spring biasing the pawl into engagement with at least one of the plurality of teeth.

13. The bicycle drive train of claim 12, wherein the pawl is pivotally coupled to the driver and the spring is mounted on the driver, wherein the spring biases the pawl radially outwardly, and wherein the sun gear comprises the plurality of teeth formed around an inner circumferential surface of the sun gear.

14. The bicycle drive train of one of the preceding claims, wherein the gear ratio is between 2:1 and 3:1.
